# EUROPEAN PATENT APPLICATION

(11) **EP 2 682 899 A2**
(43) Date of publication of application: **08.01.2014**
(21) Application number: 13174840.2
(22) Date of filing: 03.07.2013
(51) Int. Cl.: G06K 9/00

(54) **Environment recognition device**

(30) Priority: 03.07.2012 JP 2012149865
(71) Applicant: Clarion Co., Ltd., Saitama 330-0081 (JP)
(72) Inventor: Utagawa, Akira, Tokyo, 100-8220 (JP); Takemura, Masayuki, Tokyo, 100-8220 (JP); Muramatsu, Shoji, Tokyo, 100-8220 (JP); Kiyohara, Masahiro, Tokyo, 100-8220 (JP)
(74) Representative: MERH-IP Matias Erny Reichl Hoffmann

(57) **Abstract**

An environment recognition device includes: an image acquisition unit; a light spot feature amount extraction unit (102) that extracts a feature amount of a light spot from the image; a lens dirtiness judgment unit (103) that judges dirt adhering to a surface of a lens of the imaging unit; a headlight detection condition setting unit (104) that sets, based on result of judgment by the lens dirtiness judgment unit (103), in a parameter that is preliminarily related, a detection condition under which a light spot extracted by the light spot feature amount extraction unit (102) is judged to be a headlight; an approaching headlight judgment unit (105) that judges a particular light spot out of the light spots that corresponds to the parameter as an approaching headlight based on the parameter; and a vehicle annunciation signal outputting unit (106) that outputs a vehicle annunciation signal based on detection result of the approaching headlight judgment unit (105).

## Description

The disclosure of the following priority application(s) is/are herein incorporated by reference: 2012-149865 filed July 3, 2012.

The present invention relates to an environment recognition device, which recognizes a vehicle that is running behind one's own vehicle.

JP 2000-11298 A proposes a rear and side monitoring device for a vehicle that detects a traffic lane and can give a warning to the driver that it is risky to change the present traffic lane based on result of detection of the traffic lane if it is judged that such is necessary.

JP H08-193831 A discloses a rear and side monitoring device for a vehicle that correctly grasps an inter-vehicular distance between one's own vehicle and a vehicle approaching thereto and a relative speed between one's own vehicle and the approaching vehicle to properly detect a vehicle that possibly approaches too much to the one's own vehicle so that a proper warming can be given.

JP 2005-346287 A proposes an image recognizing method and apparatus for stably recognizing an object to be recognized independently of a change in a distance up to the object to be recognized.

What is important for a warning device that gives a warning in case that upon changing the traffic lane, there exists a highly risky vehicle on a traffic lane to which one's own vehicle is going to change its lane is to detect a vehicle stably as much as possible before a warning can be given. This is called a rear and side (posterolateral) blind angle warning. In order to realize this function by capturing images of rearward by an imaging device such as a camera, it is necessary to set the imaging device (e.g., camera) at a position where there will be no blind angle therefor. That is, it is necessary to set the imaging device at the outside of the vehicle interior, for example, left and right side-mirror sections or a bumper section, so that the imaging device will not be hindered its field of view by the one's own vehicle. According to the present invention, attention is paid to a problem to be solved when realizing rear and side blind angle warning by image recognition using a rear-side camera outside of the vehicle interior that is set at the bumper section.

When realizing the rear and side blind angle warning by image recognition using a camera, it is necessary to take into consideration that recognition performance varies from an image to an image. More specifically, images that can be obtained from a camera may differ greatly between a case of running on a dry road surface in a shiny daytime and a case of running on a wet road surface in a rainy nighttime, and hence required recognition performance may greatly differ between the above two cases. When a car is driven in a time zone of from evening to night, as compared with daytime, images may differ greatly in brightness between daytime and nighttime. In addition, images may differ because one's own vehicle and another vehicle run with their headlights and tail lamps being lit, images may become different depending on whether or not there are street lamps and whether or not there is reflection of light by a reflector on the road surface or on a guiderail, and so on.

In case that the camera is set at outside of the vehicle interior, there is a possibility that during the running, dirt such as fugitive dust, mud, water droplets, or the like on the road surface is swirled up and adheres to a surface of the lens. If the dirt adheres to the surface of lens (hereafter, sometimes referred to as "lens surface" for short), images will be changed. As a result, if the running of the vehicle is continued without removing the dirt on the lens surface, recognition performance of the warning device will be changed depending on the degree of dirtiness of the lens surface caused by the dirt but independently of the actual weather. In order to realize the rear and side blind angle warning by image recognition by using a camera set at the outside of the vehicle interior, there is a need for a blind angle warning device that can minimize performance degradation by the dirt that adheres to the lens surface.

An object to which a particular attention is to be paid is to increase the performance of detection of a vehicle (hereafter sometimes referred to as "vehicle detection", for short) at nighttime when the dirt adheres to the lens surface. So far as the detection of a vehicle is to be performed by image recognition, presence or absence of vehicles is judged based on feature amounts on the basis of brightness, contrast and edge of images. If slight dirtiness is present on the lens surface, the entire image will have a decreased contrast and hence the image as a whole is expressed somewhat blurred as compared with the case in which no dirt adheres to the lens surface. Since images obtained at nighttime contain lower feature amounts of the vehicle, it is necessary to perform vehicle detection using the lower feature amounts in combination with information about headlight and tail lamp. Furthermore, in case that slight dirtiness is present on the lens, it may happen that no feature amount of a vehicle can be obtained from the images obtained at nighttime. That is, in order to perform vehicle detection at nighttime in case that slight dirtiness is present on the lens, it is necessary to extract a headlight from light spots that are constituted by high brightness regions and perform vehicle detection based on the detected headlights since no vehicle body is recognizable.

According to the technology of JP 2000-11298 A, a lane marking in the view field of the rear-side camera is not always clear at nighttime and hence it is difficult to judge whether or not approaching the lane marking. In addition, since no countermeasure to the dirt adhering to the lens is provided, there may occur non-detection of a vehicle or erroneous detection of a vehicle in which an object other than a vehicle is judged to be a vehicle due to the dirtiness of lens. Furthermore, at nighttime, the visibility of a vehicle is decreased, so that the accuracy of detection is greatly decreased.

According to the technology of JP H08-193831 A, no consideration is made on the dirtiness of the lens of the camera and hence it is difficult to give a warning at a proper timing. This is because if the size of a light spot varies because of the lens dirtiness, result of calculation of the relative position of another vehicle varies.

The device disclosed in JP 2005-346287 A is not equipped with a mechanism that dynamically switches vehicle judgment patterns to an optimal one according to each situation when images vary depending on weather and time zone. Since no consideration is made on the state of lens dirtiness, the vehicle judgment pattern is not optimal when the lens is dirty.

From the above, the present invention has for its object to provide an environment recognition device that performs vehicle detection stably even if the lens of the imaging device is dirty.

In order to solve the above problem, the environment recognition device according to a first aspect of the present invention comprises: an image acquisition unit that acquires an image; a light spot feature amount extraction unit that extracts a feature amount of a light spot from the image; a lens slight dirtiness judgment unit that judges dirt adhering to a surface of a lens of an imaging unit; a headlight detection condition setting unit that sets, based on result of judgment by the lens slight dirtiness judgment unit, in a parameter that is preliminarily related, a detection condition under which a light spot out of the light spots extracted by the light spot feature amount extraction unit is judged to be a headlight; an approaching headlight judgment unit that judges a particular light spot out of the light spots that corresponds to the parameter as an approaching headlight based on the parameter set by the headlight detection condition setting unit; and / or a vehicle annunciation signal outputting unit that outputs a vehicle annunciation signal based on a result of the detection by the approaching headlight judgment unit.

The environment recognition device according to a second aspect of the present invention comprises: an image acquisition unit that acquires an image; a light spot feature amount extraction unit that extracts a feature amount of a light spot from the image; a high brightness feature amount analysis unit that acquires an image state of the acquired image based on the feature amount of the light spot extracted by the light spot feature amount extraction unit; a headlight detection condition setting unit that sets, based on the image state acquired by the high brightness feature amount analysis unit, in a parameter that is preliminarily related, a detection condition under which a light spot out of light spots extracted by the light spot feature amount extraction unit is judged to be a headlight; an approaching headlight judgment unit that judges a particular light spot out of the light spots that corresponds to the parameter as an approaching headlight based on the parameter set by the headlight detection condition setting unit; and / or a vehicle annunciation signal outputting unit that outputs a vehicle annunciation signal based on a result of the detection by the approaching headlight judgment unit.

The environment recognition device according to a third aspect of the present invention comprises: an image acquisition unit that acquires an image; a lens dirtiness judgment unit that judges dirt adhering to a surface of a lens of the imaging unit; a headlight detection condition setting unit that sets, based on result of judgment by the lens dirtiness judgment unit, in a parameter that is preliminarily related, a detection condition under which a headlight is judged from the image; a light spot feature amount extraction unit that extracts a feature amount of a light spot from the image; an optical flow unit that detects a position and a speed of another vehicle from a temporal variation of a feature amount in the image; an approaching vehicle judgment unit that judges whether or not another vehicle is approaching based on the feature amount of the light spot extracted by the light spot feature amount extraction unit or detection result of the optical flow unit; and / or a vehicle annunciation signal outputting unit that outputs a vehicle annunciation signal based on detection result of the approaching vehicle judgment unit, wherein the headlight detection condition setting unit switches, based on the result of judgment by the lens dirtiness judgment unit, between execution of processing by the light spot feature amount extraction unit and execution of processing by the optical flow unit.

### BRIEF DESCRIPTION OF THE DRAWINGS

FIG. 1 presents a diagram showing a constructive example of an environment recognition device according to the present invention;
FIG. 2 presents a diagram showing another constructive example of an environment recognition device according to the present invention;
FIG. 3 presents a diagram showing a constructive example of the light spot feature amount extraction unit according to the present invention;
FIG. 4 presents a diagram showing a constructive example of the headlight detection condition setting unit shown in FIG. 2;
FIG. 5 presents a diagram showing another constructive example of an environment recognition device according to the present invention;
FIG. 6 presents a diagram showing another constructive example of an environment recognition device according to the present invention;
FIG. 7A presents a diagram showing an example of an image captured by a rear-side camera according to the present invention;
FIG. 7B presents a diagram showing an example of an image captured by a rear-side camera according to the present invention;
FIG. 8A presents a diagram explaining processing of a light spot feature amount extraction unit according to the present invention;
FIG. 8B presents a diagram explaining processing of a light spot feature amount extraction unit according to the present invention;
FIG. 8C presents a diagram explaining processing of a light spot feature amount extraction unit according to the present invention;
FIG. 8D presents a diagram explaining processing of a light spot feature amount extraction unit according to the present invention;
FIG. 9A presents a diagram explaining processing of a headlight detection condition setting unit according to the present invention.
FIG. 9B presents a diagram explaining processing of a headlight detection condition setting unit according to the present invention.
FIG. 9C presents a diagram explaining processing of a headlight detection condition setting unit according to the present invention.

### DETAILED DESCRIPTION OF THE INVENTION

Hereafter, an embodiment is explained wither reference to the drawings.

### FIRST EMBODIMENT

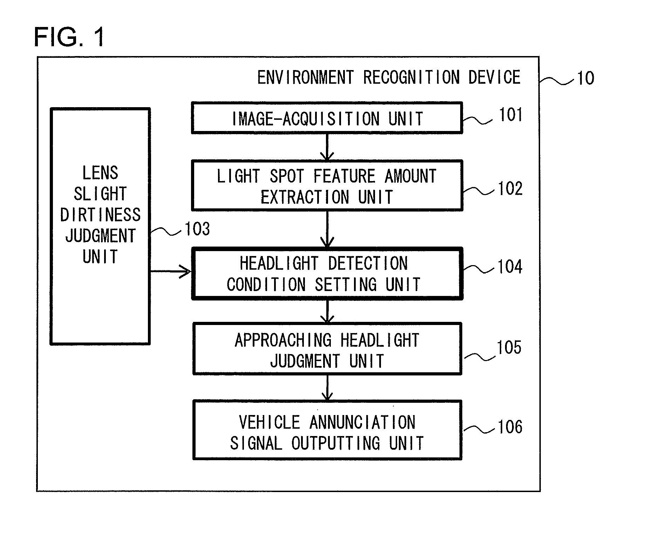

Referring to FIG. 1, an environment recognition device 10 according to a first embodiment of the present invention is explained.

The environment recognition device 10 according to a first embodiment comprises an image acquisition unit 101 that acquires an image (frame), a light spot feature amount extraction unit 102 that extracts at least one feature amount of a light spot out of brightness information, time variation and geometry information from the acquired image, a lens dirtiness judgment unit 103 that evaluates and judges slight dirt adhering to a surface of a lens of the imaging unit that is set at the outside of a vehicle interior, a headlight detection condition setting unit 104 that sets, in a parameter that is preliminarily related to and based on a result of judgment by the lens dirtiness judgment unit 103, a condition of detection under which a particular light spot is judged to be a headlight from the light spots extracted by the light spot feature amount extraction unit 102; an approaching headlight judgment unit 105 that judges a particular light spot that corresponds to the parameter out of the light spots as an approaching headlight based on the parameter set by the headlight detection condition setting unit 104; and a vehicle annunciation signal outputting unit 106 that outputs a vehicle annunciation signal based on the condition of detection of the approaching headlight judgment unit 105.

The environment recognition device 10 is featured to change a parameter based on which a particular headlight is detected out of the light spots on the basis of a result of judgment by the lens dirtiness judgment unit 103. In case that slight dirt adheres to the lens, a contrast of image decreases and hence vehicle feature amounts contained in the image cannot be obtained sufficiently. When an image obtained at nighttime is used, contrast is already low enough even if no slight dirt adheres to the lens, so that if slight dirt adheres to the lens, it is becomes more difficult to perform vehicle detection. By using the construction according to the present invention, the vehicle detection can be performed properly by adjusting the headlight detection condition even when the lens is slightly dirty. Hereafter, the respective constituent components of the environment recognition device 10 are explained.

The lens dirtiness judgment unit 103 performs judgment of slight dirt that is accumulated on the lens of the imaging unit. This is done by various methods and explanation is made in sequence.

A first method is to judge whether an image in question is obtained through a lens to which slight dirt adheres or not, from the image acquired by the image acquisition unit 101 by using an image processing technology. The judgment can be performed by evaluating a feature amount of the image obtained when slight dirt adheres to the lens. A second method is to estimate a state of the lens being slightly dirty from information about the vehicle or information obtained from environment. For example, when running time is prolonged, the possibility that dirt adheres to the lens becomes higher. According to the method, such information is used or information about an off-road running state of the vehicle is obtained, which is used to detect if the vehicle is in a state in which dirt is more apt to adhere thereto. This method when combined with the first method can tell what types of dirt is apt to adhere depending on the environment of driving, so that the accuracy of evaluation of slight dirtiness can be increased. A third method is to physically scan the dirt that adheres to the lens by using an external sensor. By using the above methods, the state of slight dirtiness of lens (hereafter, sometimes referred to as "lens slight dirtiness" for short) can be acquired.

The lens dirtiness judgment unit 103 outputs a degree of lens dirtiness using the above state of slight dirtiness. The output from the lens dirtiness judgment unit 103 may be binary information of whether slight dirtiness is present or absent (present/absent) on the lens, or a normalized index of lens dirtiness expressing the degree of slight dirtiness of lens stepwise depending on density of dirtiness. As compared with a case in which the headlight detection condition is changed based on the binary information of present/absent, use of the headlight detection condition according to stepwise indices of lens dirtiness makes it possible to increase the performance of detecting a headlight. The degree of slight dirtiness of lens may be obtained by calculating the slight dirt that adheres to the lens for every processing cycle or every few processing cycles. When the calculation is performed for every processing cycle, the state of slight dirtiness of lens is instantaneously reflected, so that processing can be always performed based on the newest state of lens. That is, even if the state of lens varies greatly for the reason that there is much swirled matter from the road surface, for example, in the case of rainy weather, or off-road running, always optimal processing can be performed. On the other hand, when calculation is performed for every few cycles, there occurs some delay but instead, it is possible to achieve a decrease in load. The slight dirtiness of lens which is a target of evaluation according to the present invention is dirtiness caused by dirt that has accumulated over a time, so that it is unnecessary to watch always the newest state of lens. Alternatively, an hourly average of results of processing each time may be obtained, which may be output as the result of the judgment. In case lens dirtiness over a long time length is a target of evaluation, an extreme value that appears momentary is a noise. So, use of the hourly average is effective in reducing noises. In addition to the degree of dirtiness, a position at which the slight dirt adheres may be output or the type of the slight dirt may be acquired and output together with that information. For example, if it is determined that the slight dirt adheres only on the left side, it is possible to change only the condition relating to the left side, so that occurrence of erroneous detection or non-detection with respect to the right side can be decreased.

The light spot feature amount extraction unit 102 can extract, from the image, objects that appear in the image as light spots, such as a headlight/tail lamp of a vehicle, reflected light from the road surface, a street lamp, reflected light from a guardrail, and off-street neon billboard or billboards and so on. A light spot can be extracted as an assembly of pixels having the same feature amount using at least one of feature amounts selected from brightness information, edge strength, and a difference in brightness from peripheral pixels. The extracted light spot is given additional information, i.e., geometry information such as position on the image or shape of block, and at least one time sequence information out of moving speed, change in shape of the light spot and a change in brightness obtained from past frames, and those pieces of information are used for dynamically extracting a necessary light spot depending on the result obtained by the lens dirtiness judgment unit 103.

The headlight detection condition setting unit 104 related to the result of judgment of the slight dirtiness extracts a particular light spot based on the feature amount of the light spot out of the light spots that matches the feature amount condition of a light spot that is preliminarily set and deems that light spot to be a headlight. The condition under which a light spot is judged to be a headlight may be constituted by at least one of factors, for example, position, area, brightness or brightness distribution, temporal direction of change of position of light spot in the image.

The approaching headlight judgment unit 105 generates a headlight judgment signal based on the result obtained by the headlight detection condition setting unit 104.

The vehicle annunciation signal outputting unit 106 outputs an annunciation signal based on the result of judgment by the approaching headlight judgment unit 105.

### SECOND EMBODIMENT

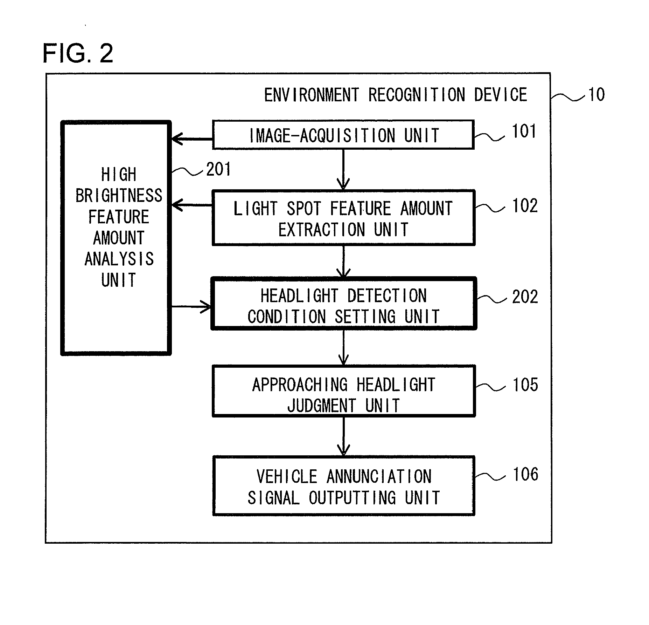

The environment recognition device 10 according to a second embodiment is shown in FIG. 2. This embodiment differs when compared with the embodiment shown in FIG. 1 in that instead of the lens dirtiness judgment unit 103 and the headlight detection condition setting unit 104 related to the result of the judgment of slight dirtiness, the environment recognition device according to the second embodiment comprises a high brightness feature amount analysis unit 201 and a headlight detection condition setting unit 202 that is related to the result of the high brightness feature amount analysis unit 201. The high brightness feature amount analysis unit 201 uses image information and light spot feature amounts obtained from at least one of the image acquisition unit 101 and the light spot feature amount extraction unit 102 and acquires an image state that corresponds to lens slight dirtiness by image analysis. The effect achieved by using this means is that it is possible to judge a case where it is difficult to recognize vehicles at nighttime although actually slight dirt does not adhere to the lens, and it is possible to perform vehicle detection using an optimal headlight detection condition. For example, in case of it being foggy, it may happen due to a decrease in visibility in an image that the image having a quality equivalent to that of an image obtained when the lens is in a state in which slight dirt adheres thereto although actually it is not the case that slight dirt adheres to the lens and thus the performance of vehicle detection is decreased in the same manner as that in the case where actually slight dirt adheres to the lens. Even in such a case, it is possible to detect a decrease in visibility similarly to the case of the slight dirtiness of lens, so that optimal vehicle detection can be performed by detection of a headlight.

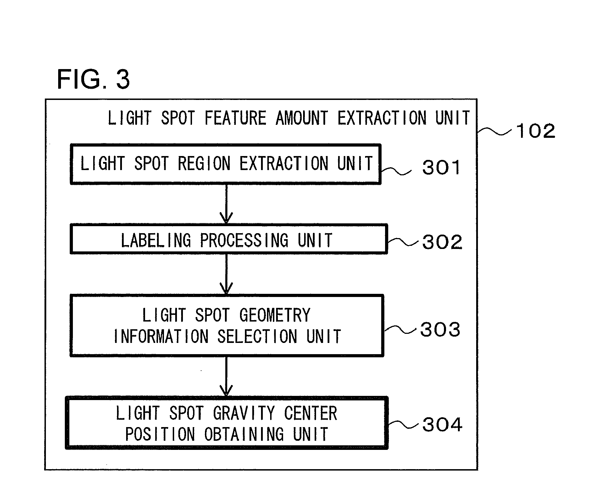

The content of processing is specifically explained. The light spot feature amount extraction unit 102 may be configured as shown in, for example, FIG. 3. A light spot region extraction unit 301 can extract a light spot region from the acquired image and output the extracted region. A labeling processing unit 302 assigns a number that is called "label number" to each region. The label number is unique to each region. A light spot geometry information selection unit 303 calculates position of gravity center and area of the region and evaluates whether or not the region is to be stored based on the calculated geometry information (position of gravity center and size of the region), so that it is possible to prevent unnecessary light spot information from being stored. By using the stored light spot information, calculation is performed what a position in real world the light spot is found when it is converted into a bird's eye view. A light spot gravity center position obtaining unit 304 can perform this calculation based on an assumption that the gravity center position of a light spot exists at the height of the headlight in real space and stores a result together with a corresponding label number.

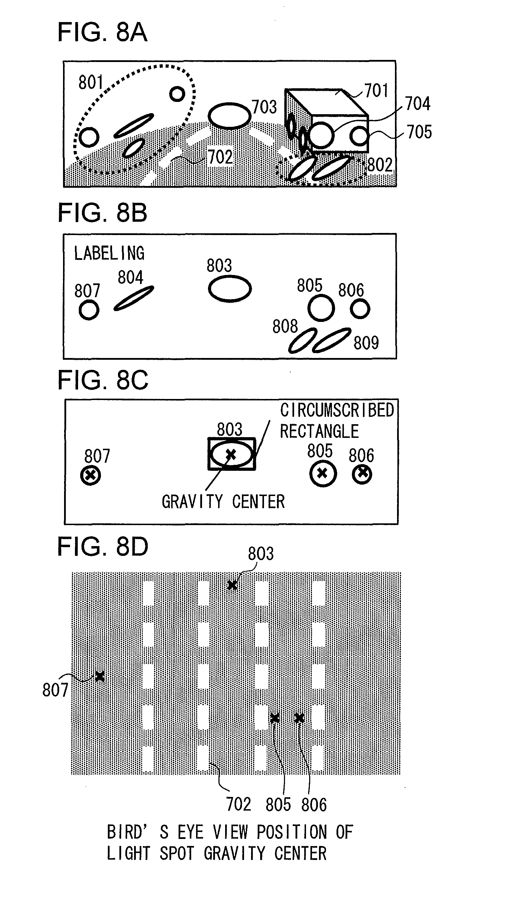

The function that can be achieved by the configuration shown in FIG. 3 is explained with reference to FIGS. 8A to 8D. First, the light spot feature amount extraction unit 102 inputs an image containing a road surface and a vehicle and other objects on rear and side of one's own vehicle, that is an output from the image acquisition unit 101 as shown in FIG. 8A. Here, reference numeral 802 indicates reflected light generated when light from head lights 704, 705 of another vehicle 701 is reflected on the road surface. On the other hand, reference numeral 801 indicates light generated by a light emitting body that is present off-street, such as a street lamp, a billboard of town, a guardrail or illumination of a building, or reflected light of the light from such light emitting body. The light spot region extraction unit 301 extracts light spots from the image. The light spots include light spots other than light from headlights, for example, high brightness regions 801 and 802. FIG. 8B shows a state in which label numbers are assigned to the light spots extracted by the light spot region extraction unit 301 in order to distinguish individual light spots. On this occasion, in order to remove noises, those light spots that have very small area of a high brightness region are excluded. For this reason, although the region 801 shown in FIG. 8A contains four high brightness regions whereas in FIG. 8B, there are two high brightness regions. The light spot geometry information selection unit 303 is explained with reference to FIG. 8C. In order to remove unnecessary light spot information, the light spots are selected based on area and geometry information. Here, it is assumed that a headlight is close to a circle and reflected light is close to an eclipse. FIG. 8C illustrates the processing based on this assumption. In this processing, the area of a light spot is compared with the area of a circumscribed rectangle of the light spot. If a ratio of the area of the light spot to the area of the circumscribed rectangle of the light spot is equal to or larger than a predetermined value, the light spot is judged to be a headlight whereas if the ratio is smaller than the predetermined value, the light spot is judged to be reflected light. The light spot geometry information selection unit 303 further performs calculation using a bird's eye view position of the gravity center of light spot. FIG. 8D shows an example of the calculation. The reference numerals in FIG. 8D correspond to those in FIG. 8C. In FIG. 8D, reference numeral 803 represents a light spot farther than others and thus it is depicted more rearward in FIG. 8D. Reference numeral 807 represents a light spot that is present off-street and reference numerals 805, 806 represent headlights of a vehicle that runs on a next traffic lane, they are depicted at their respective bird's eye view positions, with the 805, 806 being depicted as light spots on the adjacent traffic lane.

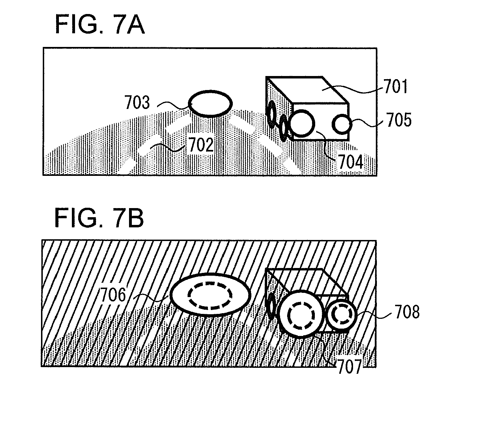

The high brightness feature amount analysis unit 201 can be implemented by the following method. The characteristic features that appear on the image when the lens is in a state of slight dirtiness are explained with reference to FIGS. 7A and 7B. FIGS. 7A and 7B present each a schematic diagram showing an image captured by a rear-side camera on the vehicle.

FIG. 7A presents a diagram showing an image of a rearward of the own vehicle at nighttime captured by using a clean lens without dirt adhering thereto. FIG. 7B presents a diagram showing an image of a rearward of the own vehicle at nighttime captured by using a lens with slight dirt thereon. Reference numeral 702 designates a white line. The white line divides the road surface into a traffic lane on which one's own vehicle runs, a right-side adjacent lane that is adjacent to the right side of the own vehicle and a left-side adjacent lane that is adjacent to the left side of the own vehicle. Reference numeral 701 designates a vehicle that runs on the left-side adjacent lane, with a front section and a right side of the vehicle being depicted by using a box. Reference numeral 704 designates an inside headlight and reference numeral 705 designates an outside headlight. Reference numeral 703 designates a headlight of a vehicle farther than the vehicle 701. FIG. 7A indicates that when the lens is not in a state of being slightly dirty, an actual shape of a light spot (here, headlight) substantially corresponds to the shape of the light spot on the frame.

On the other hand, FIG. 7B indicates that when the lens is in a state of being slightly dirty, the actual shape of the light spot differs from the shape of the light spot on the image. The broken line in FIG. 7B shows the actual shape of a headlight and indicates that on the image, due to the lens slight dirtiness, the headlights 703, 704, 705 in FIG. 7A are seen larger than what they actually are, as indicated by reference numerals 706, 707, 708 in FIG. 7B. When the lens is in a state of being slightly dirty, the light irradiated from the light spot comes in the slight dirt before it comes in the lens. Since the incident light is diffused by the slight dirt, the light that comes in the lens will be broader than it actually is. By this effect, even if the vehicle body should have originally been captured in the image, the vehicle body could not be visually recognized in the image because of halation due to reflection of light caused by the slight dirt on the lens. If this characteristic can be detected in the image, a state that is desired to be detected can be judged. For example, a high brightness feature amount, which is necessary for setting conditions of a light spot when the lens is in a state of being slightly dirty, can be obtained from brightness distribution of the light spot. Area of a high brightness region and breadth of light in a spatial direction obtained when calculating a change of brightness in a temporal and spatial directions obtained from the whole or a portion of the image acquired by the image acquisition unit 101 can be output as the high brightness feature amount.

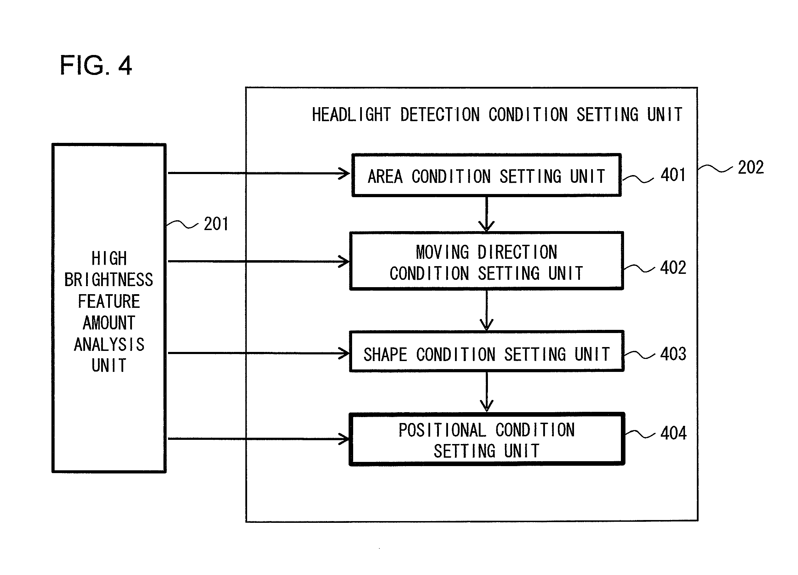

The headlight detection condition setting unit 202, which is related to a result of the high brightness feature amount analysis unit 201, can be implemented by the configuration shown in FIG. 4. The headlight detection condition setting unit 202, which is related to a result of the high brightness feature amount analysis unit 201, comprises an area condition setting unit 401 that when the result obtained by the high brightness feature amount analysis unit 201 is that the lens is in a state of being slightly dirty, sets the magnitude of area that is to be judged as a headlight on the basis of the magnitude of area that a light spot occupies in the image; a moving direction condition setting unit 402 that sets a condition under which a light spot is to be judged as a headlight, that is, how close or far the light spot on a current image is to or from the light spot in a previous image; a shape condition setting unit 403 that sets a condition on a shape of a light spot under which a particular light spot out of light spots is to be judged as a headlight; and a position condition setting unit 404 that sets a condition under which a particular light spot out of light spots is to be judged as a headlight, that is, what coordinates the gravity center of the particular light spot should have or what coordinates the four contact points of a circumscribed rectangle of the particular light spot should have in order for the particular light spot to be judged as a headlight.

The area condition setting unit 401 can decrease the occurrence of non-detection when the lens is with dirt by setting an area threshold value when the lens is with dirt smaller than an area threshold value when the lens is without dirt. Alternatively, the area condition setting unit 401 can decrease occurrence of erroneous detection when the lens is with dirt by setting the area threshold value when the lens is with dirt larger than the area threshold value when the lens is without dirt.

The moving direction condition setting unit 402 performs judgment whether or not a light spot is deemed as a headlight based on a moving direction and a distance of movement of the light spot. Generally, in case that a light spot in an image is a headlight, it can move in any direction, so that it is difficult to judge a light spot to be a headlight only based on whether the light spot is approaching to or leaving from the own vehicle. To secure minimum performance when the lens is with slight dirt, it is useful to add a condition that the light spot is approaching. It is possible that a leaving light spot is an object at rest. On the other hand, it is highly possible that a light spot that is approaching and satisfies conditions other than those set by the moving direction condition setting unit 402 is a headlight of an approaching vehicle. Therefore, the moving direction condition setting unit 402 sets as a condition that when the lens is with slight dirt, a light spot in an image should be approaching at a speed within a predetermined range. When no dirt adheres to the lens, if a light spot that moves at a low speed is judged to be a headlight, there is a possibility that a headlight of a vehicle that is running outside of the adjacent traffic lane may be erroneously detected. For this reason, it is advisable to set a condition that the speed of the light spot should be equivalent to or higher than a predetermined threshold value in order to exclude light spots at low speeds. On the other hand, when the lens is with slight dirt, there is not so high a possibility that the reflected light is erroneously detected, so that the moving speed threshold value may be set at a value lower than that when the lens is without dirt.

The shape condition setting unit 403 may set a headlight detection condition paying attention to the property that when the lens is with slight dirt, a light spot broadens due to the slight dirt. Accordingly, a light spot being closer to a circle in shape may be adopted as a headlight detection condition. However, a light spot being closer to a circle in shape may be used as the headlight detection condition regardless of whether or not the lens is with slight dirt thereon. This is effective in decreasing erroneous detection making good use of the fact that reflected light from the road surface and reflected light from a guardrail appear each as a slender light. In addition, when the lens is with slight dirt, reflected light has low brightness due to the dirt, so that the possibility of erroneous detection is decreased. Therefore, by decreasing a threshold value for determining whether or not the shape of a light spot is close to a circle, the occurrence of non-detection can be decreased.

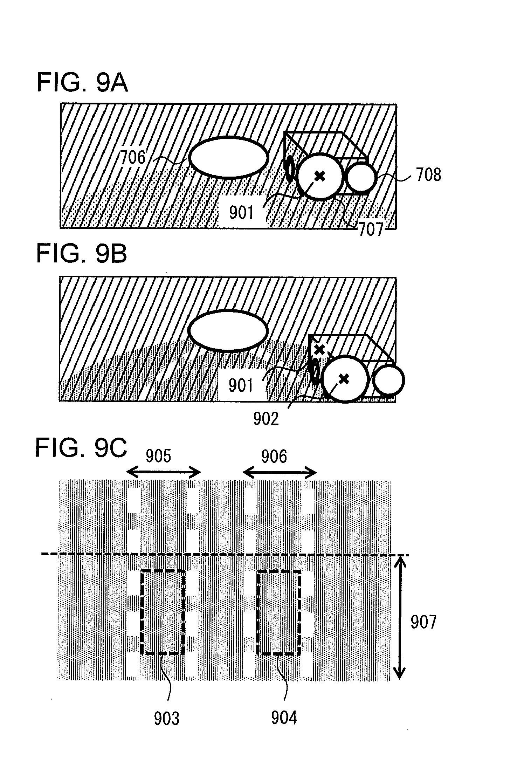

Referring to FIGS. 9A to 9C, explanation is made on important points about the headlight detection condition setting unit 202 related to the result of analysis by the high brightness feature amount analysis unit 201. Referring to FIGS. 9A and 9B, the setting by the moving direction condition setting unit 402 is explained. FIG. 9A presents a diagram showing an image at present time that is acquired by the rear-side camera. On the other hand, FIG. 9B presents a diagram showing an image at a next time that is acquired by the rear-side camera. Reference numeral 901 designates a position of gravity center of an inside headlight at present time of another vehicle and reference numeral 902 designates a position of gravity center of the inside headlight of the other vehicle at next time. In FIG. 9B, comparing the position 901 of gravity center of the light spot at present time with the position 902 of gravity center of the light spot at next time, it can be seen that the position 902 is closer to the own vehicle than the position 901 is. The moving direction of a light spot is considered as a condition. First, roughly, there are two types. One is a case in which the light spot is moving rearward, that is, the light spot is leaving from the own vehicle and a case in which the light spot is moving frontward, that is, the light spot is approaching to the own vehicle. The moving direction of the other vehicle can be any one of them and hence it cannot be said that a leaving light spot is other than a vehicle. Even if an approaching light spot is present on the adjacent traffic lane, it is also possible that reflected light of the headlight of the other vehicle that is running outside the adjacent traffic lane is present on the adjacent traffic lane. Accordingly, an approaching light spot does not always mean that it is a vehicle on the adjacent traffic lane. However, if slight dirt adheres to the lens, the light spot as a whole tends to expand in images and it is difficult to obtain feature amounts of the vehicle. Accordingly, in case that it can be seen from the images that there is a high risk, it is no problem to determine that the approaching light spot on the adjacent traffic lane is a vehicle. Due to the slight dirt, reflected light having not so high a brightness becomes difficult to be seen, so that even if the approaching light spot is deemed to be a vehicle, the frequency of occurrence of erroneous detection does not increase so much.

Referring to FIG. 9C, explanation is made on operations of the positional condition setting unit 404. A right-side adjacent lane width 905, a left-side adjacent lane width 906 and a near position 907, in principle, are set at predetermined positions based on the own vehicle's rear and right side vehicle detection region 903 and the own vehicle's rear and left side vehicle detection region 904 that are set based on the lane positions. To decrease occurrence of non-detection of a vehicle when the lens is with slight dirt, the right side adjacent traffic lane width 905 and left side adjacent traffic lane width 906 may be set wider than those in case that the lens is without dirt. On the other hand, to suppress occurrence of erroneous detection, the right side adjacent traffic lane width 905 and left side adjacent traffic lane width 906 may be set narrower than those in case that the lens is without dirt. The near position 907 is changed when the annunciation signal generation timing is to be put forward or backward.

### THIRD EMBODIMENT

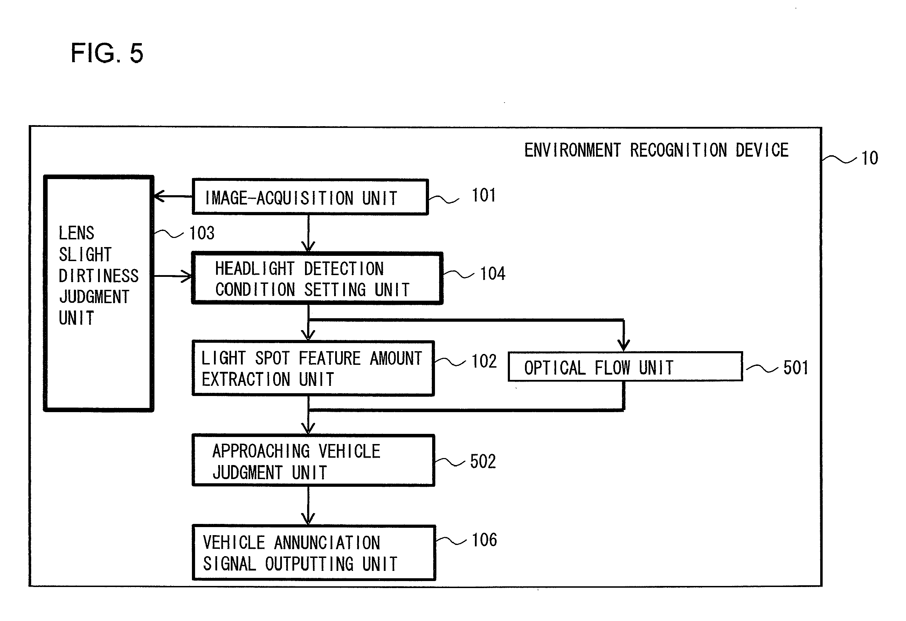

According to a third embodiment, the optical flow and the light spot feature amount extraction are switched between them based on a headlight detection condition related to the slight dirtiness judgment. FIG. 5 shows a configuration of the device according to the third embodiment.

In a case other than the case where slight dirtiness detection is performed, it is supposed that the visibility of the vehicle body section is high, and vehicle feature amounts are extracted by using a vehicle detection logic, which detects a position and a speed of another vehicle from temporal variation of feature amounts in the image by an optical flow unit 501 that uses an optical flow instead of light spot feature amounts. In a case where slight dirtiness judgment is performed, it is supposed that the visibility of the body section of a vehicle is low, and hence when it is attempted to extract feature amounts by using optical flow, it is difficult to obtain correct results. Instead, feature amounts of a headlight of a vehicle are extracted. With the optical flow, it is difficult to perform correct detection at nighttime, due to the lens with dirt, when pattern matching is done after the feature amounts are extracted whereas light spot extraction allows extraction of a light spot that is characteristic of slight dirt. That is, either the light spot feature amount extraction unit 102 or the optical flow unit 501 is used by switching them. In case that lens dirtiness judgment is not performed, it is deemed that the visibility of the vehicle body of an approaching vehicle is high, and vehicle detection using optical flow is performed. On the other hand, in case that the lens is judged to be dirty, the visibility of the vehicle body is low so that feature amount detection using optical flow gives low reliability. Accordingly in this case, vehicle detection by detecting a headlight based on light spot extraction is performed to secure reliability. In other words, by switching the optical flow and the light spot extraction function based on the lens dirtiness judgment, it is possible to perform vehicle detection solely with this device independently of whether or not the lens is with dirt. An approaching vehicle judgment unit 502 judges whether or not another vehicle is approaching based on the feature amounts of the light spot extracted by the light spot feature amount extraction unit 102 or based on the detection result of the optical flow unit 501. The vehicle annunciation signal outputting unit 106 outputs a vehicle annunciation signal to the outside based on the detection result of the approaching vehicle judgment unit 502.

### FOURTH EMBODIMENT

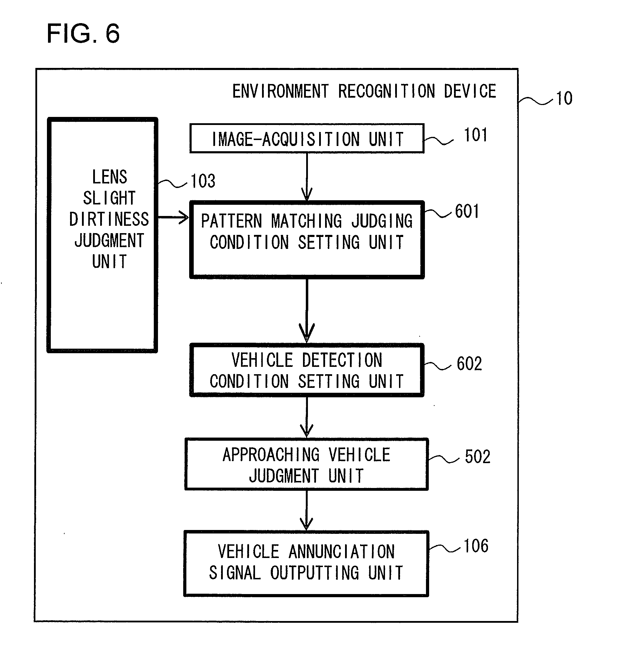

An environment recognition device according to a fourth embodiment of the present invention that can detect a vehicle by pattern matching related to slight dirtiness judgment is explained. FIG. 6 shows the structure of it.

First, explanation is made on vehicle detection using pattern matching. A pattern matching judgment condition setting unit 601 stores in advance feature amounts prepared based on images of typical vehicle types, such as a sedan, a SUV, a truck, and a bus, type by type as vehicle data. A vehicle detection condition setting unit 602 extracts a portion of images acquired in an actual driving environment and calculates feature amounts of the extracted image similar to the preliminary stored vehicle data. Then, the result of calculation is compared with the vehicle data type by type. If vehicle data of a vehicle type that has the highest similarity is found, a result of evaluation that it is highly possible that the corresponding type of vehicle is present on the adjacent traffic lane is output. Based on the result, various pieces of information are acquired, such as a depth position and a lateral position of at which the possibility of presence of the other vehicle is highest that is obtained based on a vehicle height which is predetermined according to a vehicle type; duration and strength of warning based on a vehicle length set for each vehicle type (for example, a risk of a truck is higher than a risk of a passenger car, and hence strength of warning for the truck is set higher than the passenger car and so on), information about a brake lamp and a turn signal lamp and so on. The approaching vehicle judgment unit 502 decides whether or not annunciation to the driver is necessary based on the various pieces of information mentioned above. The lateral position of the other vehicle can be used when judgment is performed as to whether or not the other vehicle is present on the adjacent traffic lane. The depth position of the other vehicle is used in combination with the information about moving speed, brake lamp, and turn signal lamp. If it is determined that, depending on the moving speed and the depth of another vehicle, a risk of another vehicle colliding with the own vehicle is high when the own vehicle changes its traffic lane without paying attention to the other vehicle, it is necessary that an annunciation is given. However, a risk may be evaluated higher or lower when a brake lamp or a turn signal lamp, respectively, is turned on. The intensity of risk may determine a degree of an increase or a decrease in the risk when the brake lamp is turned on.

Then, explanation is made on the vehicle detection by pattern matching related to the slight dirtiness judgment. In case that the feature amount data for each vehicle type is set independently of whether or not the lens is with dirt thereon, it may happen that the feature amount data of a vehicle contained in the image acquired by the image acquisition unit 101 differs greatly from the feature amount data of the vehicle that is stored in advance even when the vehicle type is the same, and thus, it is difficult to perform the vehicle detection correctly. For this reason, the pattern matching judgment condition setting unit 601 stores the vehicle data for each vehicle type depending on the degree of slight dirtiness on the lens and uses the data by switching depending on the degree of dirtiness, so that it is possible to perform vehicle detection correctly when the lens is slightly dirty. According to the present embodiment, the feature amount data of the vehicle that is used in pattern matching can be changed depending on the degree of slight dirtiness of lens and therefore, optimal vehicle detection depending on the degree of slight dirt of lens can be performed. Furthermore, an object to which the present embodiment can be applied is not limited to a headlight. Therefore, vehicle detection can be performed stably even when no headlight is turned on (daytime, etc.) or even when it is impossible to perform vehicle detection only with feature amounts of headlight depending on the type of slight dirt on the lens.

According to the embodiments of the present invention, there can be provided an environment recognition device that performs vehicle detection stably at night even if the lens of the imaging device is with dirt.

Features, components and specific details of the structures of the above-described embodiments may be exchanged or combined to form further embodiments optimized for the respective application. As far as those modifications are apparent for an expert skilled in the art they shall be disclosed implicitly by the above description without specifying explicitly every possible combination.

## Claims

1. An environment recognition device comprising:
an image acquisition unit (101) that acquires an image captured by an imaging unit;
a light spot feature amount extraction unit (102) that extracts a feature amount of a light spot from the image;
a lens dirtiness judgment unit (103) that judges dirt adhering to a surface of a lens of the imaging unit;
a headlight detection condition setting unit (202) that sets, based on result of judgment by the lens dirtiness judgment unit (103), in a parameter that is preliminarily related, a detection condition under which a light spot out of light spots extracted by the light spot feature amount extraction unit (102) is judged to be a headlight;
an approaching headlight judgment unit (105) that judges a particular light spot out of the light spots that corresponds to the parameter as an approaching headlight based on the parameter set by the headlight detection condition setting unit (202); and
a vehicle annunciation signal outputting unit (106) that outputs a vehicle annunciation signal based on detection result of the approaching headlight judgment unit (105).

2. An environment recognition device comprising:
an image acquisition unit (101) that acquires an image captured by an imaging unit;
a light spot feature amount extraction unit (102) that extracts a feature amount of a light spot from the image;
a high brightness feature amount analysis unit (201) that acquires an image state of the acquired image based on the feature amount of the light spot extracted by the light spot feature amount extraction unit (102);
a headlight detection condition setting unit (202) that sets, based on the image state acquired by the high brightness feature amount analysis unit (201), in a parameter that is preliminarily related, a detection condition under which a light spot out of light spots extracted by the light spot feature amount extraction unit (102) is judged to be a headlight;
an approaching headlight judgment unit (105) that judges a particular light spot out of the light spots that corresponds to the parameter as an approaching headlight based on the parameter set by the headlight detection condition setting unit (202); and
a vehicle annunciation signal outputting unit (106) that outputs a vehicle annunciation signal based on the detection condition of the approaching headlight judgment unit (105).

3. An environment recognition device comprising:
an image acquisition unit (101) that acquires an image captured by an imaging device;
a lens dirtiness judgment unit (103) that judges dirt adhering to a surface of a lens of the imaging unit;
a headlight detection condition setting unit (202) that sets, based on result of judgment by the lens dirtiness judgment unit (103), in a parameter that is preliminarily related, a detection condition under which a headlight is judged from the image;
a light spot feature amount extraction unit (102) that extracts a feature amount of a light spot from the image;
an optical flow unit (501) that detects a position and a speed of another vehicle from a temporal variation of a feature amount in the image;
an approaching vehicle judgment unit (502) that judges whether or not another vehicle is approaching based on the feature amount of the light spot extracted by the light spot feature amount extraction unit (102) or detection result of the optical flow unit (501); and
a vehicle annunciation signal outputting unit (106) that outputs a vehicle annunciation signal based on detection result of the approaching vehicle judgment unit (502), wherein
the headlight detection condition setting unit (202) switches, based on the result of judgment by the lens dirtiness judgment unit (103), between execution of processing by the light spot feature amount extraction unit (102) and execution of processing by the optical flow unit (501).
